# EUROPEAN PATENT APPLICATION

(11) **EP 4 703 885 A1**
(43) Date of publication of application: **04.03.2026**
(21) Application number: 24197179.5
(22) Date of filing: 29.08.2024
(51) Int. Cl.: G06F 11/07, G06F 11/30

(54) **METHOD AND SYSTEM FOR ERROR DETECTION AND HANDLING IN INDUSTRIAL DEVOPS PIPELINES FOR CYBER PHYSICAL SYSTEM**

(71) Applicant: Siemens Aktiengesellschaft, 80333 München (DE)
(72) Inventor: Gupta, Rohit, 81379 Munich (DE); Jayaram, Deepak, 81673 Munich (DE)
(74) Representative: Siemens Patent Attorneys

(57) **Abstract**

The present invention relates to a method for error detection and handling in a DevOps pipeline for a cyber-physical system and related system. The method comprising the steps of: writing and committing code destined to be used for monitoring and/or controlling operations of components of the CPS; compiling the code and packaging it into deployable units; deploying the code per deployable unit into one or more component of the CPS; connecting one or more domain-specific language, DSL, elements to respective one or more CPS components; gathering data from the respective one or more CPS components by the one or more DSL elements; processing by the one or more DSL elements the data gathered in a format of the respective one or more CPS component; comparing by the one or more DSL element the processed data to a predefined failure condition to detect a failure.

## Description

### Technical field

The present invention relates to the field of industrial DevOps, particularly to a system and method for improving efficiency and reliability in DevOps pipelines by introducing a so-called domain-specific language (DSL) element for automated error detection and handling in the pipeline system, in particular in cyber-physical systems.

### Background art

Industrial DevOps is the application of continuous delivery and DevOps principles to the development, manufacturing, deployment, and serviceability of cyber-physical systems. This approach aims at making applications more responsive to changing needs while reducing lead times. However, current industrial DevOps systems face significant challenges in achieving seamless integration and efficiency due to the inherent complexities and diversities of the involved components.

In a typical DevOps pipeline, various stages involve different teams specializing in hardware, software, firmware, and testing. Each team is responsible for its respective component, and the handover between these stages often entails difficulties. A primary reason for this is the variety of data formats and protocols used at different stages, which can impede the smooth operations of the pipeline. For instance, hardware components might generate data in a proprietary format, while software components might use standardized formats like JSON or XML. This heterogeneity in data formats often necessitates manual intervention or customized error detection mechanisms tailored to each specific platform, leading to inefficiencies and delays.

Traditional error detection mechanisms in continuous delivery systems can be heavily platform dependent. Each platform requires a unique error detection system that can interpret the specific data format it generates. For example, a temperature sensor in a smart factory might output data in a simple voltage-reading format, which then needs to be interpreted by a separate software component before any error detection can occur. This process not only increases the time required to detect and address errors at a specific stage, but also complicates the integration of new components into the pipeline. An approach to mitigate these issues is to use middleware or intermediary systems that can translate and standardize data formats between different pipeline stages. However, these systems introduce additional complexity and potential points of failure, as well as increased overhead in terms of processing time and resource utilization.

Moreover, the lack of a unified error detection framework means that errors detected at one stage of the pipeline might not be immediately recognized by subsequent stages, leading to further delays in the overall process as it is further operated despite being already faulty. If such an error is detected late in the pipeline, significant resources may have already been wasted on processing faulty data through earlier stages. This inefficiency not only slows down the pipeline but also increases the operational costs.

Competitor systems in the field of industrial DevOps also struggle with these challenges. While some have developed advanced monitoring and logging tools to track errors and performance issues across the pipeline, these tools often require extensive customization and configuration for each specific environment. Additionally, they may not provide real-time error detection and handling capabilities, resulting again in delayed responses to critical issues.

In summary, the background art in industrial DevOps highlights several key challenges:
- The diversity of data formats and protocols used by different pipeline components impedes seamless automation and integration.
- Platform-dependent error detection mechanisms lead to inefficiencies and increased complexity.
- Existing solutions introduce additional overhead and potential points of failure.
- Competitor systems lack a unified, real-time error detection and handling framework, resulting in delayed responses to errors and increased operational costs.

The present invention aims at overcoming these challenges by introducing a domain-specific language (DSL) element integrated within components of the DevOps pipeline/system. This DSL eases error detection in an appropriate domain specific language and facilitates handling across all pipeline stages, enabling real-time responses to errors and significantly improving the overall efficiency and reliability of the industrial DevOps process.

This problem is solved according to the invention by a method for error detection and handling in a DevOps pipeline for a cyber-physical system according to claim 1 and/or by a system for error detection and handling in a DevOps pipeline for a cyber-physical system according to claim 8.

### Summary of the invention

The present invention introduces a novel approach for improving the efficiency and reliability of industrial DevOps pipelines by incorporating domain-specific language (DSL) elements into components of the pipeline. This approach addresses among others the challenges associated with the heterogeneity of data formats, and the resulting manual and cumbersome handover processes between pipeline stages, and the platform-dependent nature of existing error detection mechanisms once the solution is in deployment and test phase. The primary objective of the invention is to provide a method and a system for real-time error detection and handling during deployment and test of solution for cyber physical system that are developed using a DevOps pipeline, thereby enhancing the overall performance of the pipeline approach.

The invention comprises a computer-implemented method in the form of a method of using a DSL element integrated within hardware component of the cyber system to be equipped with the solution developed with the DevOps pipeline. This DSL element is designed to analyze system information during specific phases of the pipeline (for instance deployment and test) and to halt the pipeline in its current phase directly if failures are detected based on detecting a predefined system error condition such as thresholds on value of data. The DSL elements are capable of processing various data formats, such as JSON and XML, generated by different components in the system, transforming raw data into meaningful information and automatically executing failure reporting mechanisms. Indeed, each DSL is configured to process a specific data format of the component to which it is added (explaining the wording domain-specific language element).

In operation, a DSL element can continuously monitor the data generated by the component to which it is added. For example, in a cyber-physical system with temperature sensors in a smart factory, the sensors generate data in terms of voltage. The DSL element can be embedded in the sensor to process the sensor data with the aim of detecting a failure condition. For instance, based on a predefined temperature threshold being a failure condition in the form of a failure threshold, the DSL element detects a failure/error. If the temperature exceeds the threshold, the DSL preemptively reports an error and most important it can already stop the process at this very level, thereby preventing subsequent stages from processing faulty data. That is to say that during a deployment and test phase, once a failure is detected during a test when testing the developed solution of a first work station, the DSL element can already stop the test at the first workstation without waiting the entire running time for the whole system (i.e. for the entirety of the operations of the various workstations used in performing a task).

The DSL element can perform error detection during the data transformation phase. When considering an incoming raw JSON from a temperature sensor:

```
 { "id": 1, "tempValue": 220, "unit": "Celsius", "nextStageToRun": 2 }
```

The DSL element processes this data and, based on a threshold of 230 Celsius, transforms it to:

```
 { "id": 1, "tempValue": 220, "unit": "Celsius", "failure": "yes", "nextStageToRun": 2}
```

Consequently, if a failure is detected, the DSL element halts the execution at the current component and logs the error for further examination, ensuring that the faulty data does not proceed to the next stage of the pipeline, whose subsequent stage are therefore not executed. This saves hardware and software resources, whilst speeding up the time taken to execute the pipeline successfully and also reducing the time taken to report a failure in a system preemptively.

The same principle can apply to data in XML format. An XSLT transformation file is used to append a termination tag to the XML data:

```
 <xsl:message terminate="yes"> Error Detected</xsl:message>
```

If the tag is set to "yes", the XSL processor terminates the processing, preventing the execution of the next pipeline stage. By integrating DSL elements into several components, the approach of the present invention ensures that errors are detected and reported quickly, saving resources and reducing overall processing time.

An interesting aspect already mentioned is the invention's ability to halt the pipeline at the error detection stage prevents the wastage of resources and time that would otherwise be spent processing faulty data through subsequent stages. For example, if components A, B, and C (such as workstations) have execution times of 10ms, 60ms, and 150ms respectively, detecting an error at stage A saves the 60ms and 150ms that would have been spent on stages B and C. Advantageous configurations and developments emerge from the further dependent claims and from the description with reference to the figures of the drawings.

Where appropriate, the above-mentioned configurations and developments can be combined implementations can be combined with each other as desired, as far as this is reasonable. Further possible configurations, developments and implementations of the invention also include combinations, which are not explicitly mentioned, of features of the invention, which have been described previously or are described in the following with reference to the embodiments. In particular, in this case, a person skilled in the art will also add individual aspects as improvements or supplements to the basic form of the present invention.

### Drawings

The present invention is described in greater detail in the following on the basis of the embodiments shown in the schematic figures of the drawings, in which:
- Fig. 1: Is a flowchart of a method according to the present invention.
- Fig. 2: Is a schematic view of a pipeline and system according to the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

### Detailed description

A DevOps pipeline is a set of automated processes and tools (a combination of hardware and software components) used to build, test, and deploy software on a destination system. It aims at facilitating continuous integration (CI) and continuous delivery (CD) in the steps involved in software development from code commit to production deployment and test. This pipeline approach aims at enhancing the efficiency, reliability, and speed of software development and deployment. In a typical DevOps pipeline, multiple stakeholders are involved such as hardware specialist, software developer, etc. In particular, developers are responsible for writing and committing code to a version control system. A build system then compiles the code and packages it into a deployable format. Testers then automate tests to ensure the code quality and functionality, using frameworks. Deployment tools manage the release of the software to various environments. Operations teams monitor the deployed applications, ensuring they run smoothly and are updated as needed. Each of these components and stakeholders interacts seamlessly within the DevOps pipeline, promoting collaboration and continuous improvement.

A cyber-physical system (CPS) is a system that integrates computational elements with physical processes. It usually involves a combination of software, hardware, and mechanical components that interact through sensors, actuators, and networks. The computational elements control and monitor the physical processes, while the physical components provide real-world data and responses to the computational elements. Examples of such cyber-physical systems comprise smart grids, autonomous vehicles, industrial control systems, and robotic systems. In a CPS, the embedded computers and networks monitor and control the physical processes, often in real-time, enabling precise and efficient operation.

A DevOps pipeline for applications in CPS is particularly beneficial in complex environments such as a manufacturing line. In this context, the DevOps pipeline helps managing and automating the development, testing, and deployment of software that controls various components of the manufacturing process. This integration ensures that the system operates efficiently, with minimal downtime and maximum productivity.

In a manufacturing line, the components can include several workstations, each functioning as a functional block for performing specific process operations. These operations or sub-tasks are parts of a larger task, such as producing a workpiece from raw material. For instance, a manufacturing line might have workstations for performing the sub-tasks of cutting, shaping, assembling, and finishing the workpiece. Each of these workstations operates with software that needs development, regular updates and maintenance to ensure optimal performance and data interfaces must exist between the workstations and their software parts.

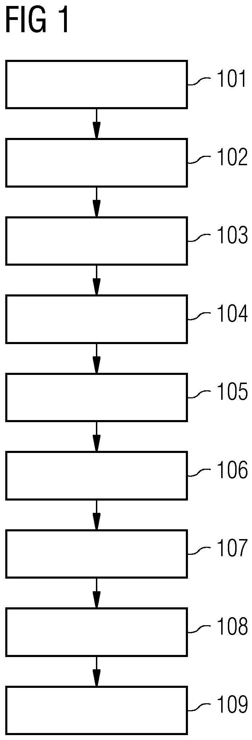

Fig. 1 is a flowchart, which illustrates the steps of a method according to the present invention, applied to DevOps pipeline for a CPS. It starts with developers or other users writing and committing code (S101) that is destined to monitor and/or control the operations of components of the CPS such as workstations or elements of workstations. A build system then compiles this code and packages it into deployable units (S102). In subsequent steps, automated tests can be performed to verify that the new code does not introduce errors and that it enhances the performance of the components of the CPS such as the workstations as intended. These tests can simulate various scenarios that the CPS (e.g. manufacturing line) might encounter, ensuring that the software can handle real-world conditions effectively. To pass all tests, the code is deployed to the respective CPS component (e.g. workstations) using deployment tools (S103).

Operations teams can then monitor the performance of the deployed software, using real-time data from the sensors and actuators in the workstations to ensure that the physical processes are running smoothly. Monitoring the performance of deployed software in a DevOps pipeline within a CPS, such as a manufacturing line, involves several potential issues. These issues arise from the complexity and heterogeneity of the system, the diversity of data formats, and the manual or cumbersome processes traditionally involved in handling, monitoring and/or transferring data between stages. For instance, in a manufacturing line CPS, different workstations generate data in various formats, such as JSON and XML. The diversity of these formats complicates the monitoring process because each format may require a distinct approach to parsing and interpreting the data. Each workstation in the manufacturing line might produce data that needs to be interpreted and handed over to the next stage, which can be prone to errors and delays if done manually. This can result in inefficiencies and a higher likelihood of undetected errors propagating through the system.

In this context, the present invention proposes introducing the use of a so-called domain-specific language (DSL) embedded element within or connected to CPS components with the aim of addressing these challenges by providing a mechanism for early error detection and handling that avoid continuing the running time of other components when a fault has already been detected. A DSL embedded element can be connected (S104) to a component (for instance a workstation element) such that it can analyze system information of the component to which it is embedded with the aim of early detecting a failure and potentially stopping processing in case such a failure is detected. The DSL embedded element can be a hardware element gathering (S105) various kind of data generated from different hardware and software component that it can then process (S106) using software compatible data formats in its internal processors (e.g. JSON, XML), then optionally saving the processed data resulting in a memory or transferring it directly. A comparison (S107) against predefined failure condition such as thresholds can be used to detect a failure at the level of the DSL component and consequently halt execution upon detecting errors. This error can then be reported (S108) such that the system or pipeline can be halted (S109). This approach ensures that errors are detected and addressed promptly, preventing faulty data from propagating through the system and reducing the overall time and resources spent on error resolution.

For example, in a CPS with temperature sensors in a smart factory, the sensors generate data in terms of voltage. If the temperature exceeds a certain threshold, the DSL embedded elements in the sensor detects this and preemptively reports an error, stopping the production process to go any further. The error detection is performed during the data transformation phase, where raw data is converted into meaningful information before proceeding to the next pipeline stage.

For instance, using the preceding example, an incoming raw JSON from a temperature sensor is:

```
 { "id": 1, "tempValue": 220, "unit": "Celsius", "nextStageToRun": 2}
```

The DSL processes/parses this data and, based on a threshold of 230 Celsius, transforms it to:

```
 { "id": 1, "tempValue": 220, "unit": "Celsius", "failure": "yes", "nextStageToRun": 2}
```

If a failure is detected (i.e., the temperature exceeds the threshold), the DSL embedded elements halt the execution of the current component and can further log the error for further examination.

The integration and use of the DSL embedded element into components can ensure that errors are detected and reported quickly, preventing subsequent pipeline stages from executing and thereby conserving resources and reducing overall processing time. As mentioned above, if components A, B, and C have execution times of 10ms, 60ms, and 150ms respectively, detecting an error at stage A saves the 60ms and 150ms that would have been spent on stages B and C.

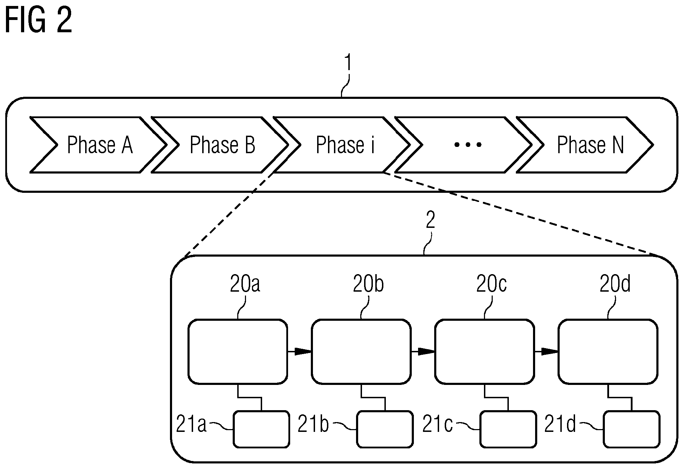

Fig. 2 is a schematic view of a DevOps pipeline 1 and system 2 according to the present invention. The DevOp pipeline can comprise several phases A to N. Each phase can relate to a chronological part of the overall development and deployment of the software. For instance, a phase i could be the test phase of the software deployed in the industrial CPS 1. The industrial CPS 1 can comprise several components 20a, 20b, 20c, and 20d. These components can be functional elements performing each a sub-task forming together a task, such as workstations. Each of the component can be used in a sequence when operating the CPS 1 for performing a task. DSL elements 20a, 20b. 20c, 20d can be connected or embedded to each of these CPS components. The DSL elements receive data of the respective CPS component and process it to determine whether a failure condition has been realized as discussed previously. In such a case, a DSL element can report to a central system or to the next component a failure. It can be by adding a failure tag as discussed previously.

## Claims

1. A method for error detection and handling in a DevOps pipeline for a cyber-physical system, CPS, the method comprising the steps of:
writing and committing code (S101) destined to be used for monitoring and/or controlling operations of components of the CPS;
compiling (S102) the code and packaging it into deployable units;
deploying (S103) the code per deployable unit into one or more component of the CPS;
connecting (S104) one or more domain-specific language, DSL, element to respective one or more CPS components;
gathering (S105) data from the respective one or more CPS components by the one or more DSL element;
processing (S106) by the one or more DSL elements the data gathered in a format of the respective one or more CPS component;
comparing (S107) by the one or more DSL element the processed data to a predefined failure condition to detect a failure.

2. The method of claim 1, wherein the method further comprises the step of:
reporting or logging (S108) the failure.

3. The method of any one of claim 1 or 2, wherein the method further comprises the step of:
halting (S109) the system or pipeline when a failure is detected or reported or logged.

4. The method of any one of the preceding claims, wherein the predefined failure condition is a threshold value specific to a type of data generated by the CPS component.

5. The method of any one of the preceding claims, wherein the one or more DSL elements are configured to process data formats including JSON and XML.

6. The method of any one of the preceding claims, wherein the one or more CPS components include sensors that generate data in the form of voltage readings.

7. The method of any one of the preceding claims, wherein in the processing step (S106) each one or more DSL element is configured to transform raw data into meaningful information before detecting errors.

8. A system for error detection and handling in a DevOps pipeline for a cyber-physical system, CPS, the system comprising:
a CPS system (2) comprising one or more components (20a, 20b, 20c, 20d);
one or more domain-specific language, DSL, elements (21a, 21b, 21c, 21d) connected to respective one or more CPS components (20a, 20b, 20c, 20d);
wherein code destined to be used for monitoring and/or controlling operations of components of the CPS has been deployed per deployable unit into respective components of the CPS;
wherein the one or more DSL elements (21a, 21b, 21c, 21d) are configured to:
gather data from the respective one or more CPS components (20a, 20b, 20c, 20d);
process the data gathered in a format of the respective one or more CPS component (20a, 20b, 20c, 20d);
compare the processed data to a predefined failure condition to detect a failure.

9. The system of claim 8, wherein the one or more DSL elements (21a, 21b, 21c, 21d) are further configured to:
report or log the failure.

10. The system of any one of claim 8 or 9, wherein the one or more DSL elements (21a, 21b, 21c, 21d) are further configured to:
halt the system or pipeline when a failure is detected or reported or logged.

11. The system of any one of the preceding claims 8-10, wherein the predefined failure condition is a threshold value specific to a type of data generated by the CPS component.

12. The system of any one of the preceding claims 8-11, wherein the one or more DSL elements are configured to process data formats including JSON and XML.

13. The system of any one of the preceding claims 8-12, wherein the one or more CPS components include sensors that generate data in the form of voltage readings.

14. The system of any one of the preceding claims 8-13, wherein each one or more DSL elements is further configured to transform raw data into meaningful information before detecting errors.

15. The system of any one of the preceding claims 8-14, further comprising a central unit configured to receive the reported or logged failures from the one or more DSL element (21a, 21b, 21c, 21d), analyzing the failures to determine their impact on the overall DevOps pipeline.
